# EUROPÄISCHE PATENTANMELDUNG

(11) **EP 3 656 200 A1**
(43) Veröffentlichungstag der Anmeldung: **27.05.2020**
(21) Anmeldenummer: 19401048.4
(22) Anmeldetag: 22.11.2019
(51) Int. Cl.: A01C 17/00, A01C 21/00

(54) **VERFAHREN ZUM ERMITTELN VON EINSTELLEMPFEHLUNGEN**

(30) Priorität: 26.11.2018 DE 102018129716
(71) Anmelder: Amazonen-Werke H. Dreyer GmbH & Co. KG, 49205 Hasbergen (DE)
(72) Erfinder: Scheufler, Bernd, 49205 Hasbergen (DE); Rahe, Florian, 49504 Lotte (DE); Ströbel-Fröschle, Markus, 49124 Georgsmarienhütte (DE)

(57) **Zusammenfassung**

Die Erfindung betrifft ein Verfahren zum Ermitteln von Einstellempfehlungen für eine landwirtschaftliche Streumaschine (10), mit den Schritten: Ermitteln einer ungleichmäßigen Streugutverteilung (26) auf einer landwirtschaftlichen Nutzfläche (20) oder eines ungleichmäßigen Ernährungszustands von Pflanzen auf der landwirtschaftlichen Nutzfläche (20), Ermitteln einer idealen Ausgleichsverteilung (34) des Streuguts, welche die Ungleichmäßigkeiten der ermittelten Streugutverteilung (26) auf der landwirtschaftlichen Nutzfläche (20) oder die Ungleichmäßigkeiten des ermittelten Ernährungszustands der Pflanzen auf der landwirtschaftlichen Nutzfläche (20) ausgleicht, und Ermitteln von Einstellempfehlungen für eine landwirtschaftliche Streumaschine (10) zur Umsetzung einer mit der landwirtschaftlichen Streumaschine (10) realisierbaren Ausgleichsverteilung des Streuguts, wobei die realisierbare Ausgleichsverteilung der idealen Ausgleichsverteilung (34) angenähert ist.

## Beschreibung

Die Erfindung betrifft ein Verfahren zum Ermitteln von Einstellempfehlungen für eine landwirtschaftliche Streumaschine nach dem Oberbegriff des Patentanspruchs 1 und ein Verfahren zum Ausbringen von Streugut nach dem Oberbegriff des Patentanspruchs 13.

Beim Ausbringen von Streugut, wie beispielsweise Dünger, auf eine landwirtschaftliche Nutzfläche wird, mit wenigen Ausnahmen, stets versucht, eine möglichst gleichmäßige Streugutverteilung auf der landwirtschaftlichen Nutzfläche umzusetzen.

Aufgrund verschiedener Umstände kann es jedoch vorkommen, dass das Streugut auf der landwirtschaftlichen Nutzfläche ungleichmäßig ausgebracht wird. Aufgrund der ungleichmäßigen Streugutverteilung auf der landwirtschaftlichen Nutzfläche ergibt sich dann ein ungleichmäßiger Ernährungszustand der auf der landwirtschaftlichen Nutzfläche heranwachsenden Pflanzen, wodurch der Ertrag erheblich beeinträchtigt werden kann.

Beispielsweise können ungeeignete bzw. fehlerhafte Maschineneinstellungen an der landwirtschaftlichen Streumaschine zu einer ungleichmäßigen Streugutverteilung führen. Ferner können geänderte Flugeigenschaften des Streuguts eine ungleichmäßige Streugutverteilung bedingen. Darüber hinaus ist es denkbar, dass Umwelteinflüsse, wie beispielsweise starke Windböen, zu einer ungleichmäßigen Streugutverteilung auf der landwirtschaftlichen Nutzfläche führen.

Der ungleichmäßige Ernährungszustand der Pflanzen auf der landwirtschaftlichen Nutzfläche wird in der Praxis auch als technische Streifenkrankheit bezeichnet, welche zur Vermeidung eines Ertragsverlusts stets verhindert werden soll. Im Stand der Technik sind bisher keine praxistauglichen Lösungen bekannt, mit welcher sich eine bereits vorliegende technische Streifenkrankheit bei Pflanzen auf einer landwirtschaftlichen Nutzfläche wirksam behandeln lässt.

Die der Erfindung zugrundeliegende Aufgabe besteht somit darin, eine praxistaugliche Lösung zum Ausgleich eines ungleichmäßigen Ernährungszustands von Pflanzen auf einer landwirtschaftlichen Nutzfläche bereitzustellen.

Die Aufgabe wird gelöst durch ein Verfahren zum Ermitteln von Einstellempfehlungen der eingangs genannten Art, wobei im Rahmen des erfindungsgemäßen Verfahrens eine ideale Ausgleichsverteilung des Streuguts ermittelt wird, welche die Ungleichmäßigkeiten der ermittelten Streugutverteilung auf der landwirtschaftlichen Nutzfläche oder die Ungleichmäßigkeiten des ermittelten Ernährungszustands der Pflanzen auf der landwirtschaftlichen Nutzfläche ausgleicht. Anschließend werden Einstellempfehlungen für eine landwirtschaftliche Streumaschine zur Umsetzung einer mit der landwirtschaftlichen Streumaschine realisierbaren Ausgleichsverteilung des Streuguts ermittelt, wobei die realisierbare Ausgleichsverteilung der idealen Ausgleichverteilung angenähert ist.

Die Erfindung macht sich die Erkenntnis zunutze, dass ungleichmäßige Streubilder auf einer landwirtschaftlichen Nutzfläche mit einem Gegenstreubild ausgeglichen werden können, um somit die Ungleichmäßigkeiten einer Streugutverteilung oder die Ungleichmäßigkeiten eines Ernährungszustandes von Pflanzen auf der landwirtschaftlichen Nutzfläche zu eliminieren oder zumindest erheblich zu reduzieren. Die ungleichmäßige Streugutverteilung und die Ausgleichsverteilung sind Querverteilungen des Streuguts. Die ermittelte Streugutverteilung und die Ausgleichsverteilung ergeben in Summe vorzugsweise eine im Wesentlichen gleichmäßige Streugutverteilung. Die Einstellempfehlungen für die landwirtschaftliche Streumaschine können Empfehlungen für den einzustellenden Aufgabepunkt des Streuguts auf zumindest eine Streuscheibe der landwirtschaftlichen Streumaschine und/oder die einzustellende Drehzahl der zumindest einen Streuscheibe der landwirtschaftlichen Streumaschine betreffen. Über einen entsprechenden Aufgabepunkt des Streuguts sowie eine entsprechende Streuscheibendrehzahl wird vorzugsweise eine Querverteilung des Streuguts umgesetzt, welche zum Ausgleich der Ungleichmäßigkeiten der ermittelten Streugutverteilung auf der landwirtschaftlichen Nutzfläche oder zum Ausgleich der Ungleichmäßigkeiten des ermittelten Ernährungszustands der Pflanzen auf der landwirtschaftlichen Nutzfläche führt.

Die landwirtschaftliche Streumaschine ist beispielsweise als Zweischeiben-Düngerstreuer ausgebildet und weist zwei nebeneinander angeordnete rotierend antreibbare Streuscheiben auf.

In einigen Anwendungsbereichen, wie beispielsweise bei Obstplantagen oder streifenweise angebauten Mischkulturen, kann auch eine ungleichmäßige Streugutverteilung oder ein ungleichmäßiger Ernährungszustand der Pflanzen auf der landwirtschaftlichen Nutzfläche beabsichtigt sein. Das erfindungsgemäße Verfahren zum Ermitteln von Einstellempfehlungen ist auch in diesen Anwendungsbereichen einsetzbar, wobei die ermittelte Ausgleichsverteilung des Streuguts in diesen Fällen zur Erzielung einer gewünschten Ungleichmäßigkeit der Streugutverteilung auf der landwirtschaftlichen Nutzfläche oder zur Erzielung eines ungleichmäßigen Ernährungszustands der Pflanzen auf der landwirtschaftlichen Nutzfläche führt. Demnach können die ermittelte Streugutverteilung und die Ausgleichsverteilung in Summe auch eine ungleichmäßige Streugutverteilung ergeben.

In einer bevorzugten Ausführungsform des erfindungsgemäßen Verfahrens erfolgt das Ermitteln der ungleichmäßigen Streugutverteilung auf der landwirtschaftlichen Nutzfläche oder des ungleichmäßigen Ernährungszustands der Pflanzen auf der landwirtschaftlichen Nutzfläche, das Ermitteln der idealen Ausgleichsverteilung des Streuguts und/oder das Ermitteln der Einstellempfehlungen für die landwirtschaftliche Streumaschine zur Umsetzung der mit der landwirtschaftlichen Streumaschine realisierbaren Ausgleichsverteilung des Streuguts mittels einer Berechnungseinrichtung. Die Berechnungseinrichtung ist vorzugsweise Bestandteil eines zentralen Computersystems, der landwirtschaftlichen Streumaschine oder eines mobilen Endgeräts. Das zentrale Computersystem kann beispielsweise ein Server sein, welcher von dem Hersteller der landwirtschaftlichen Streumaschine betrieben werden kann. Das mobile Endgerät kann ein Smartphone oder ein Tablet sein. Die Berechnungseinrichtung kann ferner Bestandteil eines Terminals, eines Jobrechners oder eines anderen Computersystems der landwirtschaftlichen Streumaschine sein.

Es ist außerdem ein erfindungsgemäßes Verfahren vorteilhaft, bei welchem das Ermitteln der Einstellempfehlungen für die landwirtschaftliche Streumaschine zur Umsetzung der mit der landwirtschaftlichen Streumaschine realisierbaren Ausgleichsverteilung des Streuguts unter Verwendung von Streudaten erfolgt, welche auf einer Datenbank gespeichert sind. Die Datenbank kann beispielsweise ein Bestandteil des zentralen Computersystems sein. Beispielsweise sind auf der Datenbank Verteilinformationen zu den mit der landwirtschaftlichen Streumaschine realisierbaren Querverteilungen in Abhängigkeit der Maschineneinstellungen und/oder der Maschinenkonfiguration hinterlegt. Unter Verwendung der auf der Datenbank gespeicherten Streudaten kann somit eine realisierbare Ausgleichsverteilung ermittelt werden, deren Abweichungen von der idealen Ausgleichsverteilung minimal sind.

In einer weiteren bevorzugten Ausführungsform des erfindungsgemäßen Verfahrens umfasst das Ermitteln der Einstellempfehlungen für die landwirtschaftliche Streumaschine zur Umsetzung der mit der landwirtschaftlichen Streumaschine realisierbaren Ausgleichsverteilung des Streuguts das Berechnen einer Mehrzahl von mit der landwirtschaftlichen Streumaschine realisierbaren Ausgleichsverteilungen und/oder das Vergleichen der berechneten mit der landwirtschaftlichen Streumaschine realisierbaren Ausgleichsverteilungen mit der ermittelten idealen Ausgleichsverteilung des Streuguts. Auf Grundlage der berechneten mit der Streumaschine realisierbaren Ausgleichsverteilungen kann dann die realisierbare Ausgleichsverteilung ausgewählt werden, welche die geringsten Abweichungen zu der ermittelten idealen Ausgleichsverteilung des Streuguts aufweist. Den mit der landwirtschaftlichen Streumaschine realisierbaren Ausgleichsverteilungen sind jeweils Einstellparameter zugeordnet, welche an der landwirtschaftlichen Streumaschine zur Umsetzung der jeweiligen Ausgleichsverteilung einzustellen sind. Die Einstellparameter können den einzustellenden Aufgabepunkt des Streuguts auf die Streuscheibe und/oder die einzustellende Drehzahl der Streuscheibe der landwirtschaftlichen Streumaschine betreffen. Außerdem können die Einstellparameter die einzustellende Öffnungsgröße, die einzustellende Öffnungsform und/oder die einzustellende Öffnungsposition einer Streugut-Zuführöffnung der landwirtschaftlichen Streumaschine betreffen. Wenn zur Ausbringung des Streuguts eine Streuscheibe mit einer oder mehreren Wurfschaufeln eingesetzt wird, können die Einstellparameter die einzustellende Schaufelposition, die einzustellende Schaufelneigung, die einzustellende Schaufelausrichtung und/oder die einzustellende Schaufellänge der einen oder der mehreren Wurfschaufeln der Streuscheibe der landwirtschaftlichen Streumaschine betreffen. Wenn zur Ausbringung des Streuguts das Streugut über eine Zuführrutsche des landwirtschaftlichen Streugeräts geleitet wird, können die Einstellparameter die einzustellende Rutschenneigung, die einzustellende Rutschenausrichtung und/der die einzustellende Rutschenposition betreffen. Darüber hinaus können die Einstellparameter die einzusetzende Streuscheibe und/oder deren Geometrie und/oder deren Wurfschaufeltyp betreffen.

Nach Auswahl der realisierbaren Ausgleichsverteilung, welche die geringsten Abweichung zu der ermittelten idealen Ausgleichsverteilung des Streuguts aufweist, können die der ausgewählten realisierbaren Ausgleichsverteilung zugeordneten Einstellparameter als Einstellempfehlungen festgelegt werden. Die Einstellempfehlungen können dann durch die landwirtschaftliche Streumaschine selbsttätig eingestellt werden, sodass die landwirtschaftliche Streumaschine eine Selbstkonfiguration zur Durchführung der Ausgleichsverteilung durchführt.

In einer alternativen Ausführungsform des erfindungsgemäßen Verfahrens werden die ermittelten Einstellempfehlungen für die landwirtschaftliche Streumaschine mittels einer Anzeigeeinrichtung ausgegeben. Vorzugsweise erfolgt die Ausgabe der ermittelten Einstellempfehlungen mittels einer Anzeigeeinrichtung eines mobilen Endgeräts. Alternativ oder zusätzlich können die Einstellempfehlungen auch durch eine Anzeigeeinrichtung der landwirtschaftlichen Streumaschine ausgegeben werden. Auf Grundlage der ausgegebenen Einstellempfehlungen kann dann eine manuelle Einstellung der Einstellempfehlungen an der landwirtschaftlichen Streumaschine erfolgen. Beispielsweise kann der Aufgabepunkt des Streuguts auf die Streuscheibe und/oder die Drehzahl der Streuscheibe manuell eingestellt werden.

In einer anderen Ausführungsform des erfindungsgemäßen Verfahrens erfolgt das Ermitteln der ungleichmäßigen Streugutverteilung auf der landwirtschaftlichen Nutzfläche oder des ungleichmäßigen Ernährungszustands der Pflanzen auf der landwirtschaftlichen Nutzfläche durch Erkundung, insbesondere durch Fernerkundung, der landwirtschaftlichen Nutzfläche. Die Erkundung der landwirtschaftlichen Nutzfläche kann beispielsweise durch die landwirtschaftliche Streumaschine und/oder ein maschinenexternes Gerät durchgeführt werden. Beispielsweise weist die landwirtschaftliche Streumaschine oder ein die landwirtschaftliche Streumaschine tragendes oder ziehendes Fahrzeug an der Front einen oder mehrere vorausschauende Sensoren auf, über welche der Ernährungszustand der Pflanzen auf der landwirtschaftlichen Nutzfläche erfassbar ist. Die Fernerkundung der landwirtschaftlichen Nutzfläche kann auch satellitengestützt und/oder drohnengestützt erfolgen.

Ferner ist ein erfindungsgemäßes Verfahren vorteilhaft, bei welchem das Ermitteln der ungleichmäßigen Streugutverteilung auf der landwirtschaftlichen Nutzfläche oder des ungleichmäßigen Ernährungszustands der Pflanzen auf der landwirtschaftlichen Nutzfläche durch optisches Auswerten der landwirtschaftlichen Nutzfläche erfolgt. Das optische Auswerten kann beispielsweise das Auswerten von Bildmaterial der landwirtschaftlichen Nutzfläche umfassen. Das Bildmaterial kann beispielsweise durch eine oder mehrere Kameras erzeugt werden, wobei die eine oder die mehreren Kameras an der landwirtschaftlichen Streumaschine, einem die landwirtschaftliche Streumaschine tragenden oder ziehenden Fahrzeug, einem Satelliten oder einer Drohne angeordnet sind. Das optische Auswerten kann ferner eine Spektralauswertung der landwirtschaftlichen Nutzfläche bzw. der Pflanzen auf der landwirtschaftlichen Nutzfläche umfassen. Über die Spektralauswertung kann der Ernährungszustand der Pflanzen über deren Farbwert ermittelt werden. Zur Spektralauswertung werden vorzugsweise ein oder mehrere Infrarotsensoren eingesetzt.

Darüber hinaus ist ein erfindungsgemäßes Verfahren vorteilhaft, bei welchem das Ermitteln der ungleichmäßigen Streugutverteilung auf der landwirtschaftlichen Nutzfläche oder des ungleichmäßigen Ernährungszustands der Pflanzen auf der landwirtschaftlichen Nutzfläche durch Untersuchen des Ernährungszustands der Pflanzen auf der landwirtschaftlichen Nutzfläche mittels eines portablen Testgeräts erfolgt. Das portable Testgerät ist vorzugsweise zum Auswerten des Stickstoffzustands der untersuchten Pflanzen eingerichtet. Das portable Testgerät weist vorzugsweise eine Messsensorik auf, wobei die Messsensorik zur Erfassung eines Stickstoffzustands ausgebildet sein kann. Das portable Testgerät kann beispielsweise ein Stickstoff-Tester (N-Tester) sein. Alternativ kann auch eine Testausbringung zur Ermittlung der ungleichmäßigen Streugutverteilung auf der landwirtschaftlichen Nutzfläche durchgeführt werden.

Es ist darüber hinaus ein erfindungsgemäßes Verfahren bevorzugt, bei welchem das Ermitteln der ungleichmäßigen Streugutverteilung auf der landwirtschaftlichen Nutzfläche durch Berechnen der ungleichmäßigen Streugutverteilung auf der landwirtschaftlichen Nutzfläche auf Grundlage von Streuguteinstellungen und/oder der Maschinenkonfiguration während eines der ungleichmäßigen Streugutverteilung zugrundeliegenden Streuvorgangs auf der landwirtschaftlichen Nutzfläche erfolgt. Die bei der Berechnung berücksichtigten Streuguteinstellungen können den eingestellten Aufgabepunkt und/oder die eingestellte Streuscheibendrehzahl während des der ungleichmäßigen Streugutverteilung zugrundeliegenden Streuvorgangs auf der landwirtschaftlichen Nutzfläche betreffen. Die bei der Berechnung berücksichtigte Maschinenkonfiguration kann den eingesetzten Streumaschinentyp und/oder die eingesetzte Streuscheibe und/oder deren Geometrie und/oder deren Wurfschaufeltyp während des der ungleichmäßigen Streugutverteilung zugrundeliegenden Streuvorgangs auf der landwirtschaftlichen Nutzfläche betreffen. Außerdem können die bei der Berechnung berücksichtigten Streuguteinstellungen die eingestellte Öffnungsgröße, die eingestellte Öffnungsform und/oder die eingestellte Öffnungsposition einer Streugut-Zuführöffnung der landwirtschaftlichen Streumaschine während des der ungleichmäßigen Streugutverteilung zugrundeliegenden Streuvorgangs auf der landwirtschaftlichen Nutzfläche betreffen. Wenn zur Ausbringung des Streuguts eine Streuscheibe mit einer oder mehreren Wurfschaufeln eingesetzt wurde, können die bei der Berechnung berücksichtigten Streuguteinstellungen die eingestellte Schaufelposition, die eingestellte Schaufelneigung, die eingestellte Schaufelausrichtung und/oder die eingestellte Schaufellänge der einen oder der mehreren Wurfschaufeln der Streuscheibe der landwirtschaftlichen Streumaschine während des der ungleichmäßigen Streugutverteilung zugrundeliegenden Streuvorgangs auf der landwirtschaftlichen Nutzfläche betreffen. Wenn das Streugut bei der Ausbringung über eine Zuführrutsche des landwirtschaftlichen Streugeräts geleitet wurde, können die bei der Berechnung berücksichtigten Streuguteinstellungen die eingestellte Rutschenneigung, die eingestellte Rutschenausrichtung und/der die eingestellte Rutschenposition betreffen.

Ferner ist ein erfindungsgemäßes Verfahren bevorzugt, bei welchem das Ermitteln der ungleichmäßigen Streugutverteilung auf der landwirtschaftlichen Nutzfläche durch Berechnen der ungleichmäßigen Streugutverteilung auf der landwirtschaftlichen Nutzfläche auf Grundlage von während eines der ungleichmäßigen Streugutverteilung zugrundeliegenden Streuvorgangs auf der landwirtschaftlichen Nutzfläche von der landwirtschaftlichen Streumaschine aufgezeichneten Verteilinformation des Streuguts erfolgt. Die aufgezeichneten Verteilinformationen können die Wurfweite und/oder den Abwurfwinkel während des der ungleichmäßigen Streugutsverteilung zugrundeliegenden Streuvorgangs auf der landwirtschaftlichen Nutzfläche betreffen. Insbesondere sind die Verteilinformationen durch eine Wurfweitenmesseinrichtung und/oder eine Abwurfwinkelmesseinrichtung der landwirtschaftlichen Streumaschine aufgezeichnet worden. Somit sind keine detaillieren Informationen zu den Streueinstellungen während des der ungleichmäßigen Streugutverteilung zugrundeliegenden Streuvorgangs auf der landwirtschaftlichen Nutzfläche notwendig, um die ungleichmäßige Streugutverteilung auf der landwirtschaftlichen Nutzfläche berechnen zu können.

Mittels des erfindungsgemäßen Verfahrens lassen sich auch ungleichmäßige Streugutverteilungen und/oder ungleichmäßige Ernährungszustände von Pflanzen über einen langen Zeitraum hinweg ausgleichen. Beispielsweise können ungleichmäßige Streugutverteilungen auf der landwirtschaftlichen Nutzfläche berücksichtigt werden, welche ein oder mehrere Jahre zurückliegen. Somit kann ein Zustand der landwirtschaftlichen Nutzfläche, welcher über mehrere Jahre hinweg zu verringerten Erträgen geführt hat, mittels des erfindungsgemäßen Verfahrens deutlich verbessert werden.

Das erfindungsgemäße Verfahren wird ferner dadurch vorteilhaft weitergebildet, dass das Ermitteln der ungleichmäßigen Streugutverteilung auf der landwirtschaftlichen Nutzfläche das Ermitteln einer ungleichmäßigen Verteilung eines Mischdüngers auf der landwirtschaftlichen Nutzfläche und/oder das Ermitteln einer ungleichmäßigen Verteilung eines oder mehrerer Einzeldünger eines Mischdüngers auf der landwirtschaftlichen Nutzfläche umfasst. Beim Ausbringen von Mischdünger kann es vorkommen, dass der gesamte Mischdünger ungleichmäßig ausgebracht wird. Ferner kann lediglich ein Einzeldünger eines Mischdüngers ungleichmäßig ausgebracht werden. Ferner können mehrere oder sämtliche Einzeldünger eines Mischdüngers unterschiedlich ungleichmäßig ausgebracht werden. Das Ermitteln der ungleichmäßigen Verteilung mehrerer Einzeldünger eines Mischdüngers auf der landwirtschaftlichen Nutzfläche kann also das Ermitteln der ungleichmäßigen Verteilung eines ersten Einzeldüngers und eines zweiten Einzeldüngers des Mischdüngers auf der landwirtschaftlichen Nutzfläche umfassen.

In einer bevorzugten Weiterbildung des erfindungsgemäßen Verfahrens umfasst das Ermitteln der idealen Ausgleichsverteilung des Streuguts das Ermitteln einer idealen Gesamtausgleichsverteilung, welche die Ungleichmäßigkeiten der ermittelten Verteilung des Mischdüngers auf der landwirtschaftlichen Nutzfläche ausgleicht und/oder das Ermitteln einer oder mehrere idealer Einzelausgleichsverteilungen, welche die Ungleichmäßigkeiten der ermittelten Verteilung des einen oder der mehreren Einzeldünger des Mischdüngers auf der landwirtschaftlichen Nutzfläche ausgleichen. Somit erlaubt das erfindungsgemäße Verfahren auch das Ermitteln von Einstellempfehlungen, mit welcher die Fehlausbringung eines Mischdüngers nachträglich wieder ausgeglichen werden kann. Wenn lediglich Einstellempfehlungen ermittelbar sind, welche zum Ausgleich von Ungleichmäßigkeiten der ermittelten Verteilung nur eines Einzeldüngers führen, wobei die Ungleichmäßigkeiten der ermittelten Verteilung eines anderen Einzeldüngers bestehen bleiben, wird vorzugsweise eine Priorisierung eines Einzeldüngers vorgenommen, für welchen dann die ideale Einzelausgleichsverteilung ermittelt wird. Es wird in diesem Fall hingenommen, dass die Ungleichmäßigkeiten der Verteilung eines Einzeldüngers nicht ausgeglichen werden. Die Priorisierung erfolgt vorzugsweise unter Berücksichtigung der Flüchtigkeit der Einzeldünger des Mischdüngers.

Die der Erfindung zugrundeliegende Aufgabe wird ferner durch ein Verfahren zum Ausbringen von Streugut der eingangs genannten Art gelöst, wobei das Ermitteln der Einstellempfehlungen für die landwirtschaftliche Streumaschine nach einer der vorstehend beschriebenen Ausführungsformen erfolgt. Hinsichtlich der Vorteile und Modifikationen des erfindungsgemäßen Verfahrens zum Ausbringen von Streugut wird auf die Vorteile und Modifikationen des erfindungsgemäßen Verfahrens zum Ermitteln von Einstellempfehlungen für eine landwirtschaftliche Streumaschine verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine gleichmäßige Streugutverteilung auf einer landwirtschaftlichen Nutzfläche;
- Fig. 2: eine ungleichmäßige Streugutverteilung auf einer landwirtschaftlichen Nutzfläche;
- Fig. 3: eine ideale Ausgleichsverteilung zum Ausgleich einer ungleichmäßigen Streugutverteilung;
- Fig. 4: das Ermitteln einer realisierbaren Ausgleichsverteilung, welche der idealen Ausgleichsverteilung angenähert ist; und
- Fig. 5: ein mobiles Endgerät und ein zentrales Computersystem während des Datenaustauschs beim Ermitteln von Einstellempfehlungen für eine landwirtschaftliche Streumaschine.

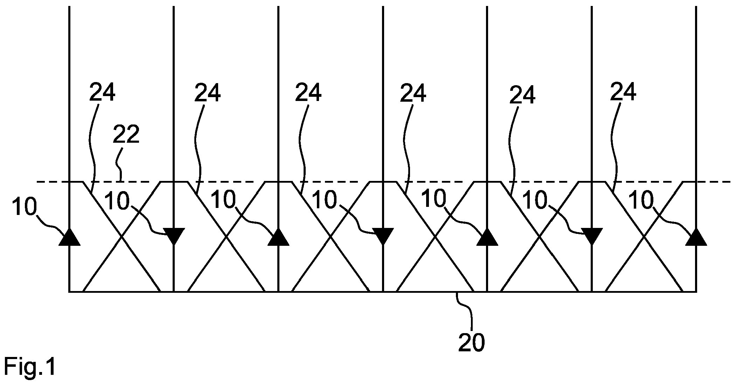

Die Fig. 1 zeigt eine landwirtschaftliche Nutzfläche 20, auf welcher mittels mehrerer überlappender schematisch dargestellter Einzelverteilungen 24 auf Basis alternierend abgefahrener Fahrgassen eine gleichmäßige Streugutverteilung 22 umgesetzt wurde. Die Einzelverteilungen 24 und die Streugutverteilung 22 sind Querverteilungen.

Die Drehzahl der Streuscheiben sowie der Aufgabepunkt des Streuguts auf die Streuscheiben der schematisch dargestellten landwirtschaftlichen Streumaschine 10 wurden bei der Streugutausbringung korrekt eingestellt und das tatsächliche Flugverhalten des ausgebrachten Streuguts entsprach dem erwarteten Flugverhalten.

Die dargestellte Streugutverteilung 22 auf der landwirtschaftlichen Nutzfläche 20 weist keine Ungleichmäßigkeiten auf und stellt für eine Vielzahl von Anwendungsbereichen, mit Ausnahme von Obstplantagen, streifenweise angebauten Mischkulturen oder teilflächenspezifischen Düngeerfordernissen, ein ideales Ausbringergebnis dar.

Aufgrund einer fehlerhaften Einstellung der landwirtschaftlichen Streumaschine 10, einem von dem erwarteten Flugverhalten abweichenden tatsächlichen Flugverhalten des Streuguts und/oder die Streugutausbringung beeinflussender Umwelteinflüsse, wie etwa starkem Wind oder Regen, kann sich auf der landwirtschaftlichen Nutzfläche 20 auch eine ungleichmäßige Streugutverteilung 26 ergeben.

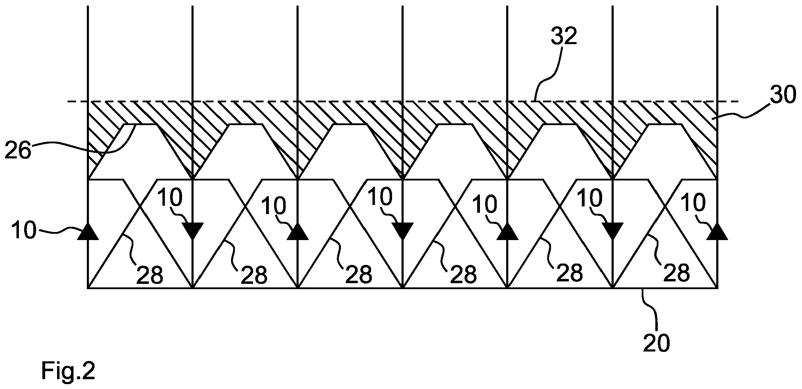

Eine entsprechende ungleichmäßige Streugutverteilung 26, welche sich aus den mehreren überlappenden Einzelverteilungen 28 ergibt, ist in der Fig. 2 dargestellt. Die Einzelverteilungen 28 und die Streugutverteilung 26 sind Querverteilungen.

Die ungleichmäßige Streugutverteilung 26 führt bei der Düngerausbringung zu einem ungleichmäßigen Ernährungszustand der Pflanzen auf der landwirtschaftlichen Nutzfläche 20, welche auch als technische Streifenkrankheit bezeichnet wird. Die ungleichmäßige Streugutverteilung 26 auf der landwirtschaftlichen Nutzfläche 20 beziehungsweise den ungleichmäßigen Ernährungszustand der Pflanzen auf der landwirtschaftlichen Nutzfläche 20 gilt es zur Vermeidung von Ertragseinbußen auszugleichen.

Hierzu sind Einstellempfehlungen für eine landwirtschaftliche Streumaschine 10 zu ermitteln, mit welcher die Differenz 30 zu der beabsichtigen gleichmäßigen Streugutverteilung 32 nachträglich ausgeglichen werden kann. Die zu ermittelnden Einstellempfehlungen sind Empfehlungen für den einzustellenden Aufgabepunkt des Streuguts auf die Streuscheiben der landwirtschaftlichen Streumaschine 10 und die einzustellende Drehzahl der Streuscheiben der landwirtschaftlichen Streumaschine 10 zur Umsetzung einer den Ausgleich der Ungleichmäßigkeiten bedingenden Querverteilung des Streuguts.

Dies erfordert zunächst entweder das Ermitteln der ungleichmäßigen Streugutverteilung 26 auf der landwirtschaftlichen Nutzfläche 20 oder das Ermitteln des ungleichmäßigen Ernährungszustands der Pflanzen auf der landwirtschaftlichen Nutzfläche 20.

Das Ermitteln der ungleichmäßigen Streugutverteilung 26 auf der landwirtschaftlichen Nutzfläche 20 kann auf Grundlage der Streueinstellungen und/oder der Maschinenkonfiguration während des der ungleichmäßigen Streugutverteilung 26 zugrundeliegenden Streuvorgangs auf der landwirtschaftlichen Nutzfläche 20 erfolgen. Hierbei kann auf Grundlage des eingestellten Aufgabepunkts des Streuguts auf die Streuscheiben und der Streuscheibendrehzahl sowie des verwendeten Streuscheibentyps während des der ungleichmäßigen Streugutverteilung 26 zugrundeliegenden Streuvorgangs die ungleichmäßige Streugutverteilung 26 berechnet werden. Diese Berechnung bietet sich an, wenn die entsprechenden Streueinstellungen und die Maschinenkonfiguration des der ungleichmäßigen Streugutverteilung 26 zugrundeliegenden Streuvorgangs noch bekannt sind und die Ungleichmäßigkeiten auf entsprechende Fehleinstellungen an der landwirtschaftlichen Streumaschine 10 zurückgeführt werden können.

Alternativ kann das Ermitteln der ungleichmäßigen Streugutverteilung 26 auf der landwirtschaftlichen Nutzfläche 20 auf Grundlage von während des der ungleichmäßigen Streugutverteilung 26 zugrundeliegenden Streuvorgangs auf der landwirtschaftlichen Nutzfläche 20 von der landwirtschaftlichen Streumaschine 10 aufgezeichneten Verteilinformationen des Streuguts erfolgen. Die aufgezeichneten Verteilinformationen können dabei die Wurfweite und/oder den Abwurfwinkel während des der ungleichmäßigen Streugutverteilung 26 zugrundeliegenden Streuvorgangs auf der landwirtschaftlichen Nutzfläche 20 betreffen. Ferner können die aufgezeichneten Verteilinformationen die Scheibendrehzahl der Streuscheiben und/oder den Aufgabepunkt des Streuguts auf die Streuscheiben während des der ungleichmäßigen Streugutverteilung 26 zugrundeliegenden Streuvorgangs auf der landwirtschaftlichen Nutzfläche 20 betreffen. Eine entsprechende Berechnung bietet sich an, wenn die landwirtschaftliche Streumaschine 10 vor dem der ungleichmäßigen Streugutverteilung 26 zugrundeliegenden Streuvorgang unter Berücksichtigung eines erwarteten Flugverhaltens des Streuguts eingestellt wurde, wobei das tatsächliche Flugverhalten des Streuguts während der Ausbringung jedoch von dem erwarteten Flugverhalten abwich. Damit eine entsprechende Berechnung möglich ist, sind jedoch während des der ungleichmäßigen Streugutverteilung 26 zugrundeliegenden Streuvorgangs mittels einer Wurfweitenmesseinrichtung der landwirtschaftlichen Streumaschine 10 und/oder mittels einer Abwurfwinkelmesseinrichtung der landwirtschaftlichen Streumaschine 10 entsprechende Verteilinformationen aufzuzeichnen.

Alternativ oder zusätzlich zu der ungleichmäßigen Streugutverteilung 26 kann auch der ungleichmäßige Ernährungszustand der Pflanzen auf der landwirtschaftlichen Nutzfläche 20 ermittelt werden. Hierzu erfolgt eine entsprechende Erkundung der landwirtschaftlichen Nutzfläche 20. Die Erkundung kann beispielsweise durch die landwirtschaftliche Streumaschine 10 selbst, etwa mit einem oder mehreren vorausschauenden Sensoren zur Untersuchung des Ernährungszustands, erfolgen. Alternativ kann die Erkundung eine satellitengestützte oder drohnengestützte Fernerkundung der landwirtschaftlichen Nutzfläche 20 sein. Die Untersuchung kann eine Spektralauswertung der landwirtschaftlichen Nutzfläche 20 umfassen. Mittels der Spektralauswertung lässt sich der Ernährungszustand über den Farbwert der Pflanzen erfassen. Im Rahmen der Erkundung kann erzeugtes Bildmaterial ausgewertet werden. Zum Ermitteln des ungleichmäßigen Ernährungszustands der Pflanzen auf der landwirtschaftlichen Nutzfläche 20 kann auch ein portables Testgerät eingesetzt werden. Das portable Testgerät kann dabei beispielsweise ein portabler Stickstoff-Tester sein.

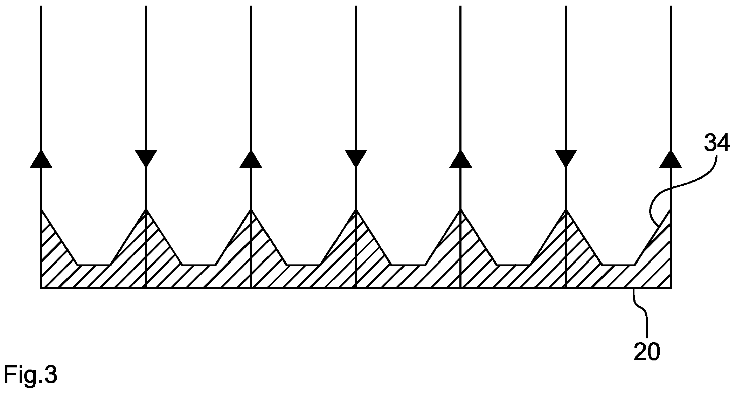

Die Fig. 3 zeigt eine ideale Ausgleichsverteilung 34 des Streuguts, welche die Ungleichmäßigkeiten der ermittelten Streugutverteilung 26 auf der landwirtschaftlichen Nutzfläche 20 oder die Ungleichmäßigkeiten des ermittelten Ernährungszustands der Pflanzen auf der landwirtschaftlichen Nutzfläche 20 ausgleicht. Die ideale Ausgleichsverteilung 34 entspricht einer Spiegelung der Differenz 30 zu der beabsichtigen Streugutverteilung 32, welche in der Fig. 2 dargestellt ist. Da die ungleichmäßige Streugutverteilung 26 auch als ungleichmäßiges Streubild bezeichnet werden kann, stellt die dargestellte ideale Ausgleichsverteilung 34 ein Gegenstreubild zum Ausgleich der Ungleichmäßigkeiten dar.

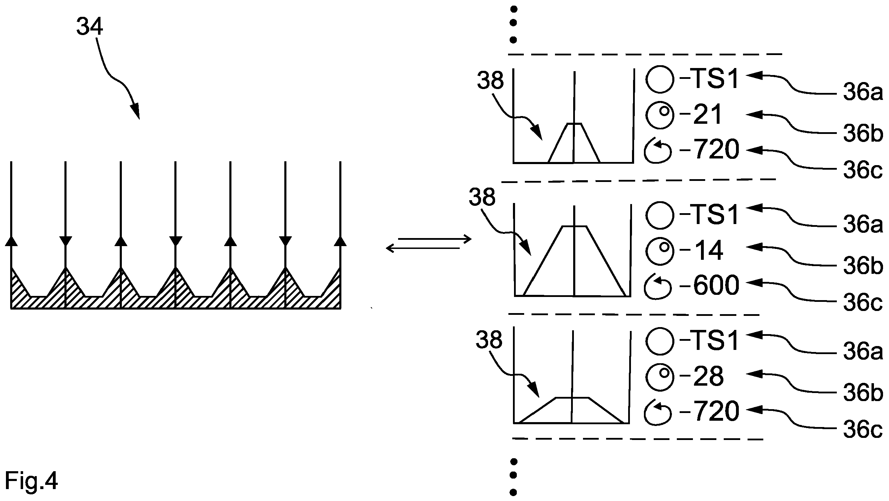

Die Fig. 4 zeigt das Ermitteln der Einstellempfehlungen für die landwirtschaftliche Streumaschine 10 zur Umsetzung einer mit der landwirtschaftlichen Streumaschine 10 realisierbaren Ausgleichsverteilung des Streuguts, wobei die realisierbare Ausgleichsverteilung der idealen Ausgleichsverteilung 34 angenähert ist.

Beim Ermitteln der Einstellempfehlungen für die landwirtschaftliche Streumaschine 10 wird zunächst eine Mehrzahl von mit der landwirtschaftlichen Streumaschine 10 realisierbaren Ausgleichsverteilungen berechnet. Die Berechnung der realisierbaren Ausgleichsverteilungen erfolgt auf Grundlage von realisierbaren Einzelverteilungen 38, wobei den jeweiligen realisierbaren Ausgleichsverteilungen ein Satz von Einstellparametern 36a-36c zugeordnet ist. Die Einstellparameter 36a-36c betreffen eine zur Umsetzung der jeweiligen Streugutverteilung einzusetzende Streuscheibe, einen einzustellenden Aufgabepunkt und eine einzustellende Scheibendrehzahl.

Die berechneten mit der landwirtschaftlichen Streumaschine 10 realisierbaren Ausgleichsverteilungen werden anschließend mit der ermittelten idealen Ausgleichsverteilung 34 des Streuguts verglichen, um die realisierbare Ausgleichsverteilung auswählen zu können, welche die geringsten Abweichungen zu der ermittelten idealen Ausgleichsverteilung 34 des Streuguts aufweist. Die der ausgewählten realisierbaren Ausgleichsverteilung zugeordneten Einstellparameter 36a-36c werden dann als Einstellempfehlungen festgelegt.

Die Einstellempfehlungen können dann entweder zur manuellen Einstellung durch den Bediener über eine Anzeigeeinrichtung 14, beispielsweise eines mobilen Endgeräts 12, ausgegeben werden oder durch die landwirtschaftliche Streumaschine 10 selbsttätig eingestellt werden.

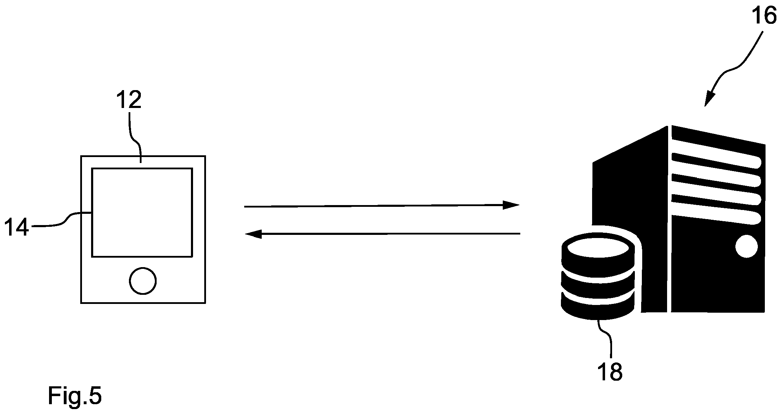

Die Fig. 5 zeigt den Datenaustausch eines als Smartphone ausgebildeten mobilen Endgeräts 12 mit einem zentralen Computersystem 16. Das zentrale Computersystem 16 ist ein Server, welcher von einem Hersteller von Streumaschinen betrieben wird und eine Datenbank 18 aufweist. Auf der Datenbank 18 sind Streudaten hinterlegt, mit welchen die mit einer landwirtschaftlichen Streumaschine 10 realisierbaren Ausgleichsverteilungen berechnet werden können.

Die Berechnungen oder Auswertevorgänge zum Ermitteln der ungleichmäßigen Streugutverteilung 26 auf der landwirtschaftlichen Nutzfläche 20 oder des ungleichmäßigen Ernährungszustands der Pflanzen auf der landwirtschaftlichen Nutzfläche 20 werden in dem dargestellten Beispiel von einer Berechnungseinrichtung des zentralen Computersystems 16 vorgenommen. Darüber hinaus übernimmt die Berechnungseinrichtung des zentralen Computersystems 16 das Ermitteln der idealen Ausgleichsverteilung 34 des Streuguts und das Ermitteln der Einstellempfehlungen für die landwirtschaftliche Streumaschine 10 zur Umsetzung der mit der landwirtschaftlichen Streumaschine 10 realisierbaren Ausgleichsverteilung des Streuguts.

Die von dem zentralen Computersystem 16 ermittelten Einstellempfehlungen werden dann dem mobilen Endgerät 12 zur Ausgabe bereitgestellt. Das mobile Endgerät 12 zeigt dem Bediener mittels der Anzeigeeinrichtung 14 dann die ermittelten Einstellempfehlungen an, damit der Bediener entsprechende Einstellungen an der landwirtschaftlichen Streumaschine 10 vornehmen kann. Nachfolgend erfolgt das Ausbringen von Streugut zum Ausgleich der ungleichmäßigen Streugutverteilung 26 auf der landwirtschaftlichen Nutzfläche 20 mittels der landwirtschaftlichen Streumaschine 10.

Die die Berechnungen und Auswertungen vornehmende Berechnungseinrichtung kann ferner Bestandteil eines Terminals, eines Jobrechners oder eines anderen Computersystems der landwirtschaftlichen Streumaschine 10 sein. Alternativ kann die Berechnungseinrichtung auch Bestandteil des mobilen Endgeräts 12 sein. In diesen Fällen kann die landwirtschaftliche Streumaschine 10 oder das mobile Endgerät 12 zur Berechnung und/oder Auswertung Daten, insbesondere Streudaten, von einer Datenbank abrufen.

Grundsätzlich lassen sich mit dem Verfahren auch Einstellempfehlungen für ungleichmäßig ausgebrachten Mischdünger ermitteln. Hierbei ist zunächst eine ungleichmäßige Verteilung des gesamten Mischdüngers oder eine ungleichmäßige Verteilung eines oder mehrerer Einzeldünger des Mischdüngers auf der landwirtschaftlichen Nutzfläche 20 zu ermitteln. Anschließend wird dann eine ideale Gesamtausgleichsverteilung, welche die Ungleichmäßigkeiten der ermittelten Verteilung des Mischdüngers auf der landwirtschaftlichen Nutzfläche 20 ausgleicht, oder eine oder mehrere ideale Einzelausgleichsverteilungen, welche die Ungleichmäßigkeiten der ermittelten Verteilung des einen oder der mehreren Einzeldünger des Mischdüngers auf der landwirtschaftlichen Nutzfläche 20 ausgleichen, ermittelt.

### Bezugszeichen

- 10: landwirtschaftliche Streumaschine
- 12: mobiles Endgerät
- 14: Anzeigeeinrichtung
- 16: zentrales Computersystem
- 18: Datenbank
- 20: landwirtschaftliche Nutzfläche
- 22: Streugutverteilung
- 24: Einzelverteilungen
- 26: ungleichmäßige Streugutverteilung
- 28: Einzelverteilungen
- 30: Differenz
- 32: beabsichtigte Streugutverteilung
- 34: ideale Ausgleichsverteilung
- 36a-36c: Einstellparameter
- 38: Einzelverteilungen

## Patentansprüche

1. Verfahren zum Ermitteln von Einstellempfehlungen für eine landwirtschaftliche Streumaschine (10), mit den Schritten:
- Ermitteln einer ungleichmäßigen Streugutverteilung (26) auf einer landwirtschaftlichen Nutzfläche (20) oder eines ungleichmäßigen Ernährungszustands von Pflanzen auf der landwirtschaftlichen Nutzfläche (20);
**gekennzeichnet durch** die Schritte:
- Ermitteln einer idealen Ausgleichsverteilung (34) des Streuguts, welche die Ungleichmäßigkeiten der ermittelten Streugutverteilung (26) auf der landwirtschaftlichen Nutzfläche (20) oder die Ungleichmäßigkeiten des ermittelten Ernährungszustands der Pflanzen auf der landwirtschaftlichen Nutzfläche (20) ausgleicht; und
- Ermitteln von Einstellempfehlungen für eine landwirtschaftliche Streumaschine (10) zur Umsetzung einer mit der landwirtschaftlichen Streumaschine (10) realisierbaren Ausgleichsverteilung des Streuguts, wobei die realisierbare Ausgleichsverteilung der idealen Ausgleichsverteilung (34) angenähert ist.

2. Verfahren nach Anspruch 1,
**dadurch gekennzeichnet, dass** das Ermitteln der ungleichmäßigen Streugutverteilung (26) auf der landwirtschaftlichen Nutzfläche (20) oder des ungleichmäßigen Ernährungszustands der Pflanzen auf der landwirtschaftlichen Nutzfläche (20), das Ermitteln der idealen Ausgleichsverteilung (34) des Streuguts und/oder das Ermitteln der Einstellempfehlungen für die landwirtschaftliche Streumaschine (10) zur Umsetzung der mit der landwirtschaftlichen Streumaschine (10) realisierbaren Ausgleichsverteilung des Streuguts mittels einer Berechnungseinrichtung erfolgt, wobei die Berechnungseinrichtung vorzugsweise Bestandteil eines zentralen Computersystems (16), der landwirtschaftlichen Streumaschine (10) oder eines mobilen Endgeräts (12) ist.

3. Verfahren nach Anspruch 1 oder 2,
**dadurch gekennzeichnet, dass** das Ermitteln der Einstellempfehlungen für die landwirtschaftliche Streumaschine (10) zur Umsetzung der mit der landwirtschaftlichen Streumaschine (10) realisierbaren Ausgleichsverteilung des Streuguts unter Verwendung von Streudaten erfolgt, welche auf einer Datenbank (20) gespeichert sind.

4. Verfahren nach Anspruch 3,
**dadurch gekennzeichnet, dass** das Ermitteln der Einstellempfehlungen für die landwirtschaftliche Streumaschine (10) zur Umsetzung der mit der landwirtschaftlichen Streumaschine (10) realisierbaren Ausgleichsverteilung des Streuguts zumindest einen der folgenden Schritte umfasst:
- Berechnen einer Mehrzahl von mit der landwirtschaftlichen Streumaschine (10) realisierbaren Ausgleichsverteilungen;
- Vergleichen der berechneten mit der landwirtschaftlichen Streumaschine (10) realisierbaren Ausgleichsverteilungen mit der ermittelten idealen Ausgleichsverteilung (34) des Streuguts;
- Auswählen der realisierbaren Ausgleichsverteilung, welche die geringsten Abweichungen zu der ermittelten idealen Ausgleichsverteilung (34) des Streuguts aufweist;
- Festlegen der der ausgewählten realisierbaren Ausgleichsverteilung zugeordneten Einstellparameter (36a-36c) als Einstellempfehlungen;
- selbsttätiges Einstellen der ermittelten Einstellparameter (36a-36c) durch die landwirtschaftliche Streumaschine (10).

5. Verfahren nach einem der vorstehenden Ansprüche,
**gekennzeichnet durch** den Schritt:
- Ausgeben der ermittelten Einstellempfehlungen für die landwirtschaftliche Streumaschine (10) mittels einer Anzeigeeinrichtung (14), vorzugsweise einer Anzeigeeinrichtung (14) eines mobilen Endgeräts (12).

6. Verfahren nach einem der vorstehenden Ansprüche,
**dadurch gekennzeichnet, dass** das Ermitteln der ungleichmäßigen Streugutverteilung (26) auf der landwirtschaftlichen Nutzfläche (20) oder des ungleichmäßigen Ernährungszustands der Pflanzen auf der landwirtschaftlichen Nutzfläche (20) durch Erkundung, insbesondere Fernerkundung, der landwirtschaftlichen Nutzfläche (20) erfolgt.

7. Verfahren nach einem der vorstehenden Ansprüche,
**dadurch gekennzeichnet, dass** das Ermitteln der ungleichmäßigen Streugutverteilung (26) auf der landwirtschaftlichen Nutzfläche (20) oder des ungleichmäßigen Ernährungszustands der Pflanzen auf der landwirtschaftlichen Nutzfläche (20) durch optisches Auswerten der landwirtschaftlichen Nutzfläche (20) erfolgt.

8. Verfahren nach einem der vorstehenden Ansprüche,
**dadurch gekennzeichnet, dass** das Ermitteln der ungleichmäßigen Streugutverteilung (26) auf der landwirtschaftlichen Nutzfläche (20) oder des ungleichmäßigen Ernährungszustands der Pflanzen auf der landwirtschaftlichen Nutzfläche (20) durch Untersuchen des Ernährungszustands der Pflanzen auf der landwirtschaftlichen Nutzfläche (20) mittels eines portablen Testgeräts erfolgt.

9. Verfahren nach einem der vorstehenden Ansprüche,
**dadurch gekennzeichnet, dass** das Ermitteln der ungleichmäßigen Streugutverteilung (26) auf der landwirtschaftlichen Nutzfläche (20) durch Berechnen der ungleichmäßigen Streugutverteilung (26) auf der landwirtschaftlichen Nutzfläche (20) auf Grundlage von Streueinstellungen und/oder der Maschinenkonfiguration während eines der ungleichmäßigen Streugutverteilung (26) zugrundeliegenden Streuvorgangs auf der landwirtschaftlichen Nutzfläche (20) erfolgt.

10. Verfahren nach einem der vorstehenden Ansprüche,
**dadurch gekennzeichnet, dass** Ermitteln der ungleichmäßigen Streugutverteilung (26) auf der landwirtschaftlichen Nutzfläche (20) durch Berechnen der ungleichmäßigen Streugutverteilung (26) auf der landwirtschaftlichen Nutzfläche (20) auf Grundlage von während eines der ungleichmäßigen Streugutverteilung (26) zugrundeliegenden Streuvorgangs auf der landwirtschaftlichen Nutzfläche (20) von der landwirtschaftlichen Streumaschine (10) aufgezeichneten Verteilinformationen des Streuguts erfolgt.

11. Verfahren nach einem der vorstehenden Ansprüche,
**dadurch gekennzeichnet, dass** das Ermitteln der ungleichmäßigen Streugutverteilung (26) auf der landwirtschaftlichen Nutzfläche (20) zumindest einen der folgenden Schritte umfasst:
- Ermitteln einer ungleichmäßigen Verteilung eines Mischdüngers auf der landwirtschaftlichen Nutzfläche (20);
- Ermitteln einer ungleichmäßigen Verteilung eines oder mehrerer Einzeldünger eines Mischdüngers auf der landwirtschaftlichen Nutzfläche (20).

12. Verfahren nach Anspruch 11,
**dadurch gekennzeichnet, dass** das Ermitteln der idealen Ausgleichsverteilung (34) des Streuguts zumindest einen der folgenden Schritte umfasst:
- Ermitteln einer idealen Gesamtausgleichsverteilung, welche die Ungleichmäßigkeiten der ermittelten Verteilung des Mischdüngers auf der landwirtschaftlichen Nutzfläche (20) ausgleicht;
- Ermitteln einer oder mehrerer idealer Einzelausgleichsverteilungen, welche die Ungleichmäßigkeiten der ermittelten Verteilung des einen oder der mehreren Einzeldünger des Mischdüngers auf der landwirtschaftlichen Nutzfläche (20) ausgleichen.

13. Verfahren zum Ausbringen von Streugut zum Ausgleich einer ungleichmäßigen Streugutverteilung (26) auf einer landwirtschaftlichen Nutzfläche (20) mittels einer landwirtschaftlichen Streumaschine (10), mit den Schritten:
- Ermitteln von Einstellempfehlungen für die landwirtschaftliche Streumaschine (10); und
- selbsttätiges Einstellen der ermittelten Einstellempfehlungen vor und/oder während des Ausbringvorgangs;
**dadurch gekennzeichnet, dass** das Ermitteln der Einstellempfehlungen für die landwirtschaftliche Streumaschine (10) nach einem der vorstehenden Ansprüche erfolgt.
